(19) Europäisches Patentamt
European Patent Office
Office européen des brevets

(11) **EP 1 433 127 B1**

(12) **FASCICULE DE BREVET EUROPEEN**

(45) Date de publication et mention
de la délivrance du brevet:
**24.11.2010 Bulletin 2010/47**

(51) Int Cl.:
***G06K 19/077*** *(2006.01)*

(21) Numéro de dépôt: **02774903.5**

(86) Numéro de dépôt international:
**PCT/FR2002/003020**

(22) Date de dépôt: **05.09.2002**

(87) Numéro de publication internationale:
**WO 2003/021526 (13.03.2003 Gazette 2003/11)**

(54) **CARTE DU TYPE CARTE A PUCE COMPRENANT UN SUPPORT PLAN SENSIBLEMENT RECTANGULAIRE**

CHIP-KARTE MIT EINEM RECHTECKIGEN FLÄCHIGEN TRÄGER

CHIP CARD COMPRISING A MORE OR LESS RECTANGULAR FLAT SUPPORT

(84) Etats contractants désignés:
**AT BE BG CH CY CZ DE DK EE ES FI FR GB GR IE IT LI LU MC NL PT SE SK TR**

(30) Priorité: **05.09.2001 FR 0111698**

(43) Date de publication de la demande:
**30.06.2004 Bulletin 2004/27**

(73) Titulaire: **Gemalto SA**
**92190 Meudon (FR)**

(72) Inventeurs:
• **DHERS, Gilles**
**13470 Carnoux en Provence (FR)**
• **DURANO, Frédéric, Les Jardins d'Eden**
**13009 Marseille (FR)**
• **LIMOUSIN, Guillaume**
**F-13950 Cadolive (FR)**
• **HOUSSE, Nicolas**
**F-83170 Rougiers (FR)**

(56) Documents cités:
**FR-A- 2 783 948     US-A- 5 936 227**

EP 1 433 127 B1

**Description**

La présente invention concerne une carte du type carte à puce comprenant un support plan sensiblement rectangulaire.

Une carte du type carte à puce est une carte de dimensions et de fonctions normalisées comportant un ou plusieurs circuits intégrés à contacts électriques. Une telle carte est décrite par exemple dans le document WO 99/38118.

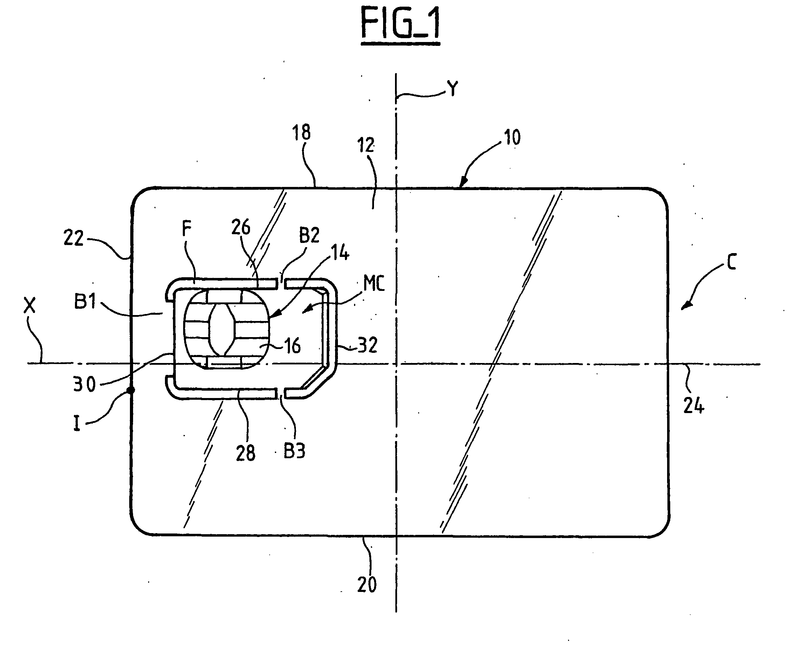

Cette carte C comprend, comme montré en figure 1, un support plan rectangulaire 10 présentant deux bords longitudinaux 18 et 20 sensiblement parallèles entre eux, et deux bords transversaux 22 et 24 dits respectivement avant et arrière sensiblement parallèles entre eux, perpendiculaires aux bords longitudinaux 18 et 20 et de longueur inférieure à celle de ces derniers.

Le support 10 est destiné à recevoir, sur une portion dite fonctionnelle 14, située au recto 12 de ce dernier et au voisinage du bord transversal avant 22, une série de plages de contact électrique 16 associées à un microcircuit électronique (non représenté). Les plages de contact électrique 16 servent à raccorder ce microcircuit électronique à un circuit d'exploitation appartenant à un dispositif comportant par exemple un connecteur dans lequel la carte est mise en place de sorte que ses plages de contact coopèrent avec des contacts du connecteur.

En outre, le support présente une fente F sensiblement rectangulaire entourant la portion fonctionnelle, de manière à délimiter une mini-carte MC détachable du support 10 et reliée à ce dernier par au moins deux bretelles, et en général trois B1, B2 et B3. La mini-carte MC ainsi délimitée a un contour sensiblement parallèle à celui du support 10 de la carte C.

Deux des trois bretelles, dites bretelles haute B2 et basse B3, s'étendent respectivement depuis un bord longitudinal 26, 28 de la mini-carte MC en direction du bord longitudinal immédiatement adjacent 18, 20 du support 20. Les bretelles haute B2 et basse B3 comportent chacune deux rainures en regard l'une de l'autre sur chaque face du support, rendant ces bretelles aptes à résister à des efforts de flexion et de torsion tout en permettant de détacher la mini-carte MC du support 20 par pression.

La troisième bretelle B1, dite grande bretelle latérale, s'étend en général depuis le bord transversal 30 de la mini-carte le plus proche du bord transversal avant 22 du support 10 en direction de ce bord transversal avant 22.

Grâce à ces bretelles, il est possible de transformer la carte C, qui est par exemple une carte SIM (Subscriber Identity Module) destinée à être utilisée dans un téléphone portable, en une mini-carte SIM destinée à être utilisée dans un téléphone portable plus petit, en détachant la mini-carte MC de la carte C par rupture des bretelles par exemple par pression manuelle verticale perpendiculaire au plan du support 10.

Cette conception permet de fournir à l'utilisateur une carte qu'il peut utiliser selon l'un ou l'autre des formats (carte ou mini-carte) selon le dispositif récepteur dans lequel il doit introduire la carte.

De manière connue d'après le document WO 99/38118, la section de la rainure supérieure (c'est-à-dire située au niveau du recto 12 du support 10) de chacune des bretelles haute et basse B2, B3 dans un plan perpendiculaire au plan du support 10 et parallèle aux bords transversaux 22, 24 de ce dernier est de forme sensiblement trapézoïdale avec ses bases parallèles au plan du support 10. Ceci permet aux bretelles haute et basse de résister à des tests de résistance mécanique normalisés selon la norme ISO et comportant des cycles répétés de flexions, sans qu'il y ait de dégradation de la puce ou du support.

Ces cycles de flexion sont de deux types :

- 500 flexions selon un axe X parallèle aux bords longitudinaux et situé à égale distance de ces derniers,
- 500 flexions selon un axe Y parallèle aux bords transversaux et situé à égale distance de ces derniers.

De manière connue également, la position, normalisée, de la mini-carte MC dans la carte C est telle que la mini-carte ne se trouve pas à égale distance des deux bords longitudinaux 18 et 20. Ainsi, le bord longitudinal 26 de la mini-carte MC relié au support 10 par la bretelle haute B2 est plus proche du bord longitudinal adjacent 18 du support 10 que le bord longitudinal 28 de la mini-carte MC relié au support 10 par la bretelle basse B3.

Un procédé de fabrication classique de la carte consiste à injecter la matière plastique polymère destinée à former le support 10 dans un moule adapté. Cette injection permet de former le corps de carte ainsi que la mini-carte et les bretelles simultanément. Ensuite, on procède à l'impression des différentes informations devant figurer sur la carte, puis on vernit le support, et enfin, on l'encarte.

L'injection est telle que le matériau polymère pénètre dans le moule par une entrée dite d'injection 1 voisine du bord transversal avant 22 du support 10 et du bord longitudinal 28 de la mini-carte, portant la bretelle basse B3.

Le flux de matière dans la bretelle basse B3 est donc dirigé de la carte vers la mini-carte ; ainsi, les chaînes du matériau polymère sont orientées dans la bretelle basse en direction de la mini-carte. De ce fait, lors du détachement de la mini-carte, la rupture de la bretelle basse B3 se fait en laissant une ligne de découpe rentrant vers l'intérieur de la mini-carte. Au contraire, le flux de matière dans la bretelle haute B2 est dirigé de la mini-carte vers la carte, de sorte que lors du détachement de la mini-carte, la rupture de la bretelle haute B2 se fait en laissant une ligne de découpe sortant vers l'extérieur de la mini-carte, et ce d'autant plus que la base du trapèze de la rainure supérieure est longue.

Ceci pose un problème important pour l'utilisation ultérieure de la mini-carte dans un connecteur. En effet, la matière dépassant au-delà de la mini-carte gne l'insertion de la mini-carte dans le connecteur avec lequel elle est destinée à coopérer, qui est de son côté ajusté au plus près aux dimensions normalisées de la mini-carte afin d'assurer un contact correct et fiable des plages de contact de la mini-carte avec les contacts du connecteur.

Ce problème est également évoqué dans le document FR2 783 948 qui décrit une mini-carte rattachée à un support par des bretelles comportant chacune deux portions de rainures différentes. Les deux bretelles hautes et basses sont cependant réalisées de manière totalement identique.

D'autre part, les rainures des bretelles haute et basse étant identiques, elles risquent de céder en mme temps lors des cycles de flexion ISO, de sorte que la mini-carte n'est plus rattachée par au moins deux bretelles au support de la carte ; dès lors, la planéité de l'ensemble n'est pas conservée et la norme ISO n'est plus respectée.

Un autre document US 5, 936, 227 décrit une carte au format standard comprenant une fente entourant une partie fonctionnelle, de manière à délimiter une mini carte détachable, reliée au support de carte par deux bretelles. Lors de la séparation de la mini carte du support, les deux bretelles ne sont pas cassées simultanément mais l'une après l'autre, grâce à la présence d'une ligne de prédécoupe qui fragilise plus l'une des bretelles et la rend moins résistante aux flexions.

La présente invention a donc pour objet de mettre au point une carte du type carte à puce décrit précédemment, présentant une résistance en flexion répondant aux normes ISO en la matière tout en permettant un détachement de la mini-carte ne laissant pas dépasser de matière susceptible d'entraver l'insertion de la mini-carte dans un dispositif avec lequel elle doit interagir.

La présente invention propose à cet effet une carte du type carte à puce telle que décrite par la revendication 1.

Grâce à l'invention, en choisissant pour la rainure supérieure de la bretelle haute une configuration la rendant moins apte à résister aux efforts de flexion, on peut notamment réduire la longueur de la base de la section trapézoïdale de la section de cette rainure, ce qui rapproche la ligne de rupture de la mini-carte et réduit donc la quantité de matière dépassant de la mini-carte après détachement de cette dernière.

Ce choix n'est pas pénalisant sur le plan de la résistance aux contraintes de flexion de la carte. En effet, compte tenu de la position de la mini-carte dans la carte, l'axe de flexion longitudinal traverse la mini-carte en étant plus proche du bord transversal de la mini-carte portant la bretelle basse que de l'autre bord transversal.

La bretelle basse se trouvant à proximité de l'axe de flexion X, c'est donc elle qui est le plus soumise aux contraintes de flexion selon cet axe, alors que la bretelle haute est nettement moins soumise aux contraintes de flexion selon cet axe, et peut donc avoir une section, par exemple en forme de V ou en forme de trapèze ayant une base de courte longueur, qui la rend moins résistante aux efforts de flexion mais rapproche la ligne de rupture du bord de la mini-carte.

Par ailleurs, en choisissant pour la rainure supérieure de la bretelle haute une configuration la rendant moins apte à résister aux efforts de flexion, on assure que lors des cycles de flexion ISO, la bretelle haute se rompt avant la bretelle basse, de sorte que, lorsqu'il existe trois bretelles de liaison de la mini-carte au support, il y a toujours au moins deux bretelles (la bretelle basse et la grande bretelle latérale) reliant la mini-carte au support.

Selon un mode de réalisation de l'invention, la rainure supérieure de la bretelle haute peut présenter une section dans un plan perpendiculaire à celui du support et parallèle aux bords transversaux du support sensiblement en forme de V.

Cette section est particulièrement avantageuse pour réduire la matière dépassant de la mini-carte après détachement de cette dernière.

Dans ce cas, la rainure supérieure de la bretelle haute peut être sensiblement parallèle aux bords longitudinaux de la mini-carte et la branche du V la plus proche de la mini-carte peut faire un angle avec le recto du support supérieur à celui que fait la branche du V la plus éloignée de la mini-carte.

On réduit ainsi au maximum le résidu de matière.

Selon un autre mode de réalisation de l'invention, la rainure supérieure de la bretelle basse peut présenter une section dans un plan perpendiculaire à celui du support et parallèle aux bords transversaux du support sensiblement en forme de trapèze dont les bases sont parallèles au plan du support.

On confère ainsi à la bretelle basse une résistance aux contraintes de flexion particulièrement importante.

Dans ce cas, la rainure supérieure de la bretelle basse peut être sensiblement parallèle aux bords longitudinaux de la mini-carte, et le côté du trapèze le plus proche de la mini-carte peut faire un angle avec le recto du support supérieur à celui que fait le côté du trapèze le plus éloigné de la mini-carte.

Ceci permet de renvoyer la ligne de rupture le plus près possible de la mini-carte.

Enfin, la carte selon l'invention peut comprendre en outre une troisième bretelle qui s'étend longitudinalement depuis le bord transversal de la mini-carte adjacent audit bord transversal avant du support jusqu'au bord transversal avant du support.

D'autres caractéristiques et avantages de la présente invention apparaîtront dans la description suivante d'un mode de réalisation de l'invention, donné à titre illustratif et nullement limitatif.

Dans les figures suivantes :

- la figure 1 représente en vue de dessus une carte à puce selon l'art antérieur,
- la figure 2 représente en vue de dessus une carte à puce selon l'invention,
- la figure 3 est une vue schématique agrandie en coupe selon la ligne III-III de la figure 2,
- la figure 4 est une vue schématique agrandie en coupe selon la ligne IV-IV de la figure 2.

Dans toutes ces figures, les éléments communs portent les mêmes numéros de référence.

La figure 1 a été décrite en relation avec l'état de la technique.

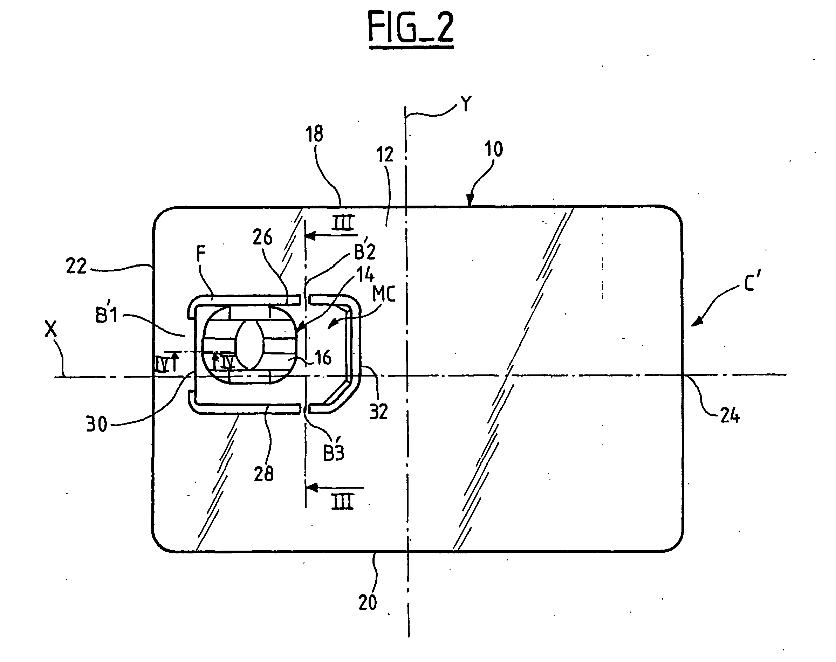

La figure 2 montre une carte C' selon l'invention. Elle diffère de la carte C de l'art antérieur représentée en figure 1 par la structure de ses bretelles de liaison, notamment la bretelle haute B'2 et la bretelle basse B'3, et également la grande bretelle latérale B'1.

Selon l'invention, les bretelles haute B'2 et basse B'3 sont telles que la bretelle haute B'2 résiste moins aux efforts de flexion que la bretelle basse B'3, c'est-à-dire qu'elle se rompt plus aisément lors de contraintes en flexion imposées au support 10 auquel la mini-carte MC est attachée.

Tout comme dans l'art antérieur, les bretelles B'2 et B'3 sont alignées selon un même axe transversal et à proximité de la portion fonctionnelle 14. Elles ont par exemple une largeur parallèlement à l'axe X comprise entre 1 et 1,2 mm.

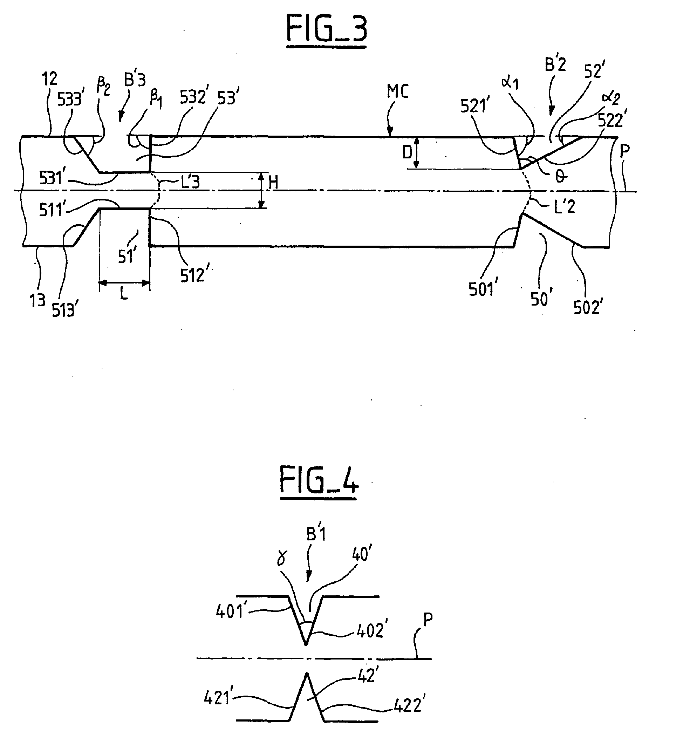

La figure 3 représente en vue agrandie et en coupe la carte C' selon l'invention selon la ligne III-III de la figure 2. On voit sur cette coupe que chacune des bretelles haute B'2 et basse B'3 comporte au niveau du recto 12 du support 10 une rainure dite supérieure 52' et 53'. Selon l'invention, les rainures supérieures 52' et 53' ont des sections distinctes l'une de l'autre.

Ainsi, la rainure supérieure 52' de la bretelle haute B'2 a une section en forme de V de préférence asymétrique, et la rainure supérieure 53' de la bretelle basse B'3 a une section en forme de trapèze de préférence asymétrique dont les bases sont sensiblement parallèles au plan du support 10 (qui est celui de la figure 4).

Les rainures 52' et 53' forment des amorces de rupture servant à faciliter la rupture, par pression manuelle du recto 12 vers le verso 13, des bretelles B'2 et B'3 en vue de détacher la mini-carte MC du support 10. Dans le mode de réalisation illustré à la figure 3, des rainures correspondantes dites inférieures 50' et 51' sont pratiquées en regard respectivement des rainures 52' et 53' au verso 13 du support. Les rainures 50' et 51'sont symétriques respectivement aux rainures 52' et 53' par rapport à un plan médian P du support 10 passant entre son recto 12 et son verso 13.

Les rainures 52' et 50' ont donc une section en forme de V asymétrique. La branche de ce V 521' (respectivement 501') la plus proche de la mini-carte MC

forme un angle $\alpha_1$ avec le recto 12 (respectivement le verso 13) du support 20 supérieur à l'angle $\alpha_2$ formé entre l'autre branche de ce V 522' (respectivement 502') et le recto 12 (respectivement le verso 13) du support 20.

Selon un mode de réalisation particulier, $\alpha_1$ vaut 75°, $\alpha_2$ vaut 33°, la profondeur D de la rainure 52' est de 0,26 mm de sorte que l'angle $\theta$ entre les deux branches 521' et 522' du V vaut 57°.

Dans le cadre de l'invention, il est possible de choisir ces différents paramètres dans les intervalles suivants :

$$45° \leq \alpha_1 \leq 90°$$

$$15° \leq \alpha_2 \leq 45°$$

$$0,1 \text{ mm} \leq D \leq 0,3 \text{ mm}$$

$$45° \leq \theta \leq 120°.$$

En choisissant $\alpha_1$ supérieur à $\alpha_2$, on rapproche la ligne de rupture de la bretelle B'2 de la mini-carte MC, ce qui réduit la quantité de matière dépassant de la mini-carte après détachement de cette dernière. La ligne de rupture L'2 est représentée en trait interrompu sur la figure 3.

En outre, en choisissant une section en forme de V pour la rainure supérieure 52' de la bretelle haute B'2, on rend cette dernière moins résistante aux contraintes de flexion, de sorte que l'on assure qu'elle se rompt avant la bretelle B'3 ; ainsi, la mini-carte MC est toujours rattachée par au moins deux bretelles de liaison, B'1 et B'3, au support 10 lors des cycles de flexion.

Pour obtenir ces résultats, on peut également, de manière plus générale, choisir pour la rainure supérieure 52' une section en forme de trapèze, mais dont le fond est moins long que celui du trapèze de la rainure supérieure 53'.

Les rainures 53' et 51' quant à elles ont donc une section en forme de trapèze asymétrique. Le fond 531' (respectivement 511') de la rainure 53' (respectivement 51') constitue la petite base de ce trapèze. Le côté de ce trapèze 532' (respectivement 512') le plus proche de la mini-carte MC forme un angle $\beta_1$ avec le recto 12 (respectivement le verso 13) du support 10 supérieur à l'angle $\beta_2$ formé entre l'autre côté de ce trapèze 533' (respectivement 513') et le recto 12 (respectivement le verso 13) du support 10. La ligne de rupture L'3 de la bretelle B'3 est représentée en trait interrompu sur la figure 3.

Selon un mode de réalisation particulier, $\beta_1$ vaut 90°, $\beta_2$ vaut 45°, la longueur L des fonds 531' et 511' est de 0,25 mm et la distance H entre ces derniers est de 0,26 mm.

Dans le cadre de l'invention, il est possible de choisir ces différents paramètres dans les intervalles suivants :

$$60° \leq \beta_1 \leq 90°$$

$$30° \leq \beta_2 \leq 75°$$

$$0,1 \text{ mm} \leq L \leq 0,5 \text{ mm}$$

$$0,2 \text{ mm} \leq H \leq 0,6 \text{ mm}.$$

Le choix de $\beta_1$ supérieur à $\beta_2$, et de préférence sensiblement égal à 90°, permet de renvoyer la ligne de rupture le plus près possible de la mini-carte

Le choix de l'angle $\beta_2$ et de la longueur L a des conséquences sur l'impression de la carte C'. En effet, les rainures ne sont pas imprimables car l'encre ne pénètre pas ou pénètre mal au fond de la zone amincie. Ainsi, $\beta_2$ doit être le plus grand possible, et L le plus faible possible afin que la zone dépourvue d'encre soit la plus petite possible. Toutefois, $\beta_2$ doit également être suffisamment faible pour renvoyer la fragilité du côté de la mini-carte, et L suffisamment grand pour que le découplage entre la mini-carte MC et le support 10 augmente, c'est-à-dire pour augmenter la résistance aux flexions.

Quant à la hauteur H, elle doit être également optimisée, car si elle est trop faible, elle résiste mais ne se rompt pas suffisamment aisément, et si elle est trop importante, elle se brise dès les premiers cycles de flexion.

Les intervalles indiqués ci-dessus permettent de satisfaire ces conditions contradictoires.

Le choix d'une section en forme de trapèze pour la rainure supérieure 53' de la bretelle basse B'3 rend cette dernière très résistante aux contraintes de flexion, de sorte que l'on assure qu'elle se rompt après la bretelle B'2 ; ainsi, lorsque l'on pousse les cycles de flexion jusqu'à la rupture de la bretelle haute B'2, il reste deux points d'ancrage latéral et bas de la mini-carte MC au support 10 ce qui conserve même après rupture la fonctionnalité de la carte C'.

Pour ce qui est de la grande bretelle latérale B'1, sa structure peut être identique à celle de la bretelle B1 de l'art antérieur. Sa largeur selon l'axe X est relativement importante, de l'ordre de 11 mm, afin de conférer à la mini-carte MC et à la carte C' des propriétés mécaniques leur permettant de résister aux efforts de torsion et de flexion.

La grande bretelle latérale B'1 comporte également des rainures supérieure 40' et inférieure 42' (voir figure 4), symétriques par rapport au plan médian P du support 10 et s'étendant sur tout la longueur de la bretelle B'1.

Pour simplifier par rapport à l'art antérieur, les rainures 40' et 42' ont une section en forme de V symétrique. Selon un mode de réalisation particulier, l'angle y entre les deux branches 401' et 402' (respectivement 421' et 422') de ce V vaut environ 30°, et la profondeur de ces rainures 40' et 42' est d'environ 0,32 mm.

Bien entendu, l'invention n'est pas limitée au mode de réalisation qui vient d'être décrit.

Notamment, les rainures supérieure et inférieure d'une même bretelle ne sont pas nécessairement symétriques par rapport au plan médian du support de la carte. Néanmoins, leur profil doit être tel qu'elles concourent au fait que la bretelle haute est moins résistante en flexion que la bretelle basse.

Par ailleurs, la bretelle B'1 peut être remplacée par deux bretelles espacées, selon le principe exposé dans le document WO 99/38118.

En outre, on peut utiliser plus de trois bretelles pour rattacher la mini-carte MC au support 10.

La largeur des rainures des différentes bretelles peut être inférieure à celle des bretelles correspondantes.

De plus, la section des rainures de la bretelle basse peut être sensiblement trapézoïdale, c'est-à-dire que le fond de ces rainures, qui correspond à la petite base du trapèze, peut être incliné par rapport au plan du support au lieu d'être parallèle à ce dernier. On obtient les mêmes avantages de l'invention qu'avec un fond parallèle au plan du support.

Enfin, on pourra remplacer tout moyen par un moyen équivalent sans sortir du cadre de l'invention, tel que décrit par les revendications ci-joints.

**Revendications**

1. Carte (C') du type carte à puce comprenant un support plan (10) sensiblement rectangulaire présentant deux bords longitudinaux (18, 20) sensiblement parallèles entre eux, et deux bords transversaux (22, 24) dits avant et arrière sensiblement parallèles entre eux et perpendiculaires auxdits bords longitudinaux (18,20), ledit support (10) étant destiné à recevoir, sur une portion (14) dite fonctionnelle dudit support (10) située au recto (12) de ce dernier et au voisinage dudit bord transversal avant (22), au moins une plage de contact électrique (16), ledit support (10) présentant en outre une fente (F) sensiblement rectangulaire entourant ladite portion fonctionnelle (14), de manière à délimiter une mini-carte (MC) détachable dudit support (10) et reliée audit support (10) par au moins deux bretelles de liaison (B'2, B'3), ladite mini-carte (MC) ayant un contour sensiblement parallèle à celui dudit support (10) de ladite carte (C'), chacune desdites bretelles (B'2, B'3) s'étendant respectivement depuis un bord longitudinal (26,28) de ladite mini-carte (MC) en direction du bord longitudinal (18, 20) immédiatement adjacent de ladite carte (C'), chacune desdites bretelles (B'2, B'3) comportant deux rainures en regard l'une de l'autre sur chacune des faces de ladite bretelle (B'2, B'3), lesdites rainures étant aptes à résister à des efforts de flexion, et

les rainures, dites supérieures, de chacune desdites bretelles (B'2, B'3) portées par le recto (12) dudit support étant distinctes l'une de l'autre, de sorte que la bretelle (B'2) la plus proche de l'un desdits bords longitudinaux dudit support, dite bretelle haute, résiste moins aux efforts de flexion que l'autre bretelle (B'3), dite bretelle basse, **caractérisée en ce que** ladite carte (C') comprend en outre une troisième bretelle (B'1) qui s'étend longitudinalement depuis le bord transversal (30) de ladite mini-carte (MC) adjacent audit bord transversal avant (22) dudit support (10) jusqu'audit bord transversal avant (22) dudit support (10).

2. Carte selon la revendication 1 **caractérisée en ce que** ladite rainure supérieure (52') de ladite bretelle haute (B'2) présente une section dans un plan perpendiculaire à celui dudit support (10) et parallèle aux bords transversaux (22,24) dudit support (10) sensiblement en forme de V.

3. Carte selon la revendication 2 **caractérisée en ce que** ladite rainure supérieure (52') de la bretelle haute (B'2) est sensiblement parallèle aux bords longitudinaux (26,28) de ladite mini-carte (MC) et **en ce que** la branche (521') dudit V la plus proche de ladite mini-carte (MC) fait un angle aigu (ai) avec le recto (12) dudit support (10) supérieur à l'angle aigu (02) que fait la branche (522') dudit V la plus éloignée de ladite mini-carte (MC) avec le recto (12).

4. Carte selon la revendication 3 **caractérisée en ce que** l'angle aigu entre la branche (521') dudit V la plus proche de ladite mini-carte (MC) et ledit recto (12) est compris entre 45° et 90°.

5. Carte selon l'une des revendications 3 ou 4 **caractérisée en ce que** l'angle aigu (OC2) entre la branche (522') dudit V la plus éloignée de ladite mini-carte (MC) et ledit recto (12) est compris entre 15° et 45°.

6. Carte selon l'une des revendications 3 à 5 **caractérisée en ce que** la profondeur (D) de ladite rainure supérieure (52') de ladite bretelle haute (B'2) est comprise entre 0,1 et 0,3 mm.

7. Carte selon l'une des revendications 1 à 6 **caractérisée en ce que** ladite rainure supérieure (53') de ladite bretelle basse (B'3) présente une section dans un plan perpendiculaire à celui dudit support (10) et parallèle aux bords transversaux (22,24) dudit support sensiblement en forme de trapèze dont les bases sont sensiblement parallèles au plan dudit support (10).

8. Carte selon la revendication 7 **caractérisée en ce que** ladite rainure supérieure (53') de ladite bretelle basse (B'3) est sensiblement parallèle aux bords longitudinaux (26,28) de ladite mini-carte (MC) et **en ce que** le côté (532') dudit trapèze le plus proche de ladite mini-carte (MC) fait un angle aigu (pi) avec le recto (12) dudit support (10) supérieur à l'angle aigu (ß2) que fait le côté (533') dudit trapèze le plus éloigné de ladite mini-carte (MC) avec le recto (12).

9. Carte selon l'une des revendications 7 ou 8 **caractérisée en ce que** l'angle aigu (pi) entre le coté (532') dudit trapèze le plus proche de ladite mini-carte (MC) et ledit recto (12) est compris entre 60° et 90°.

10. Carte selon l'une des revendications 7 à 9 **caractérisée en ce que** l'angle aigu (2) entre le coté (533') dudit trapèze le plus éloigné de ladite mini-carte (MC) et ledit recto (12) est compris entre 30° et 75°.

11. Carte selon l'une des revendications 7 à 10 **caractérisée en ce que** la longueur (L) de la petite base (531') dudit trapèze est comprise entre 0,1 et 0,5 mm.

12. Carte selon la revendication 1, **caractérisé en ce que** ladite troisième bretelle (B'1) présente une section dans un plan perpendiculaire à celui dudit support (10) et parallèle aux bords longitudinaux (18,20) dudit support (10) sensiblement en forme de V.

13. Carte selon l'une des revendications 1 à 12, **caractérisée en ce que** ledit support (10) est obtenu par moulage.

**Claims**

1. A card (C') of the chip card type including a substantially rectangular plane support (10) having two substantially parallel longitudinal edges (18, 20), and two so-called front and back substantially parallel transversal edges which are perpendicular to said longitudinal edges (18, 20), with said support (10) being intended for receiving, on one so-called functional portion (14) of said support (10) located on the face (12) of the latter and in the vicinity of said front transversal edge (22), at least one electric contact pad (16), said support (10) further having a substantially rectangular slot (F) surrounding said functional portion (14), so as to limit a mini-card (MC) detachable from said support (10) and connected to said support (10) by at least two connecting links (B'2, B'3), said mini-card (MC) having a contour substantially parallel to that of said support (10) of said card (C'), each one of said connecting links (B'2, B'3) respectively extending from a longitudinal edge (26, 28) of said mini-card (MC) toward the longitudinal edge (18, 20) immediately adjacent to said card (C'), with each one of said connecting links (B'2, B'3) including two grooves facing one another on each one of the faces of said connecting link (B'2, B'3), with said grooves being able to resist bending stresses and the so-called upper grooves of each one of said connecting links (B'2, B'3) being borne by the face (12) of said support (10) and being separate from each other, so that the connecting link (B'2) which is the closest to one of said longitudinal edges of said support, the so-called upper connecting link is not as resistant to bending stresses as the other connecting link, the so-called lower connecting link, **characterized in that** said card (C') further includes a third connecting link (B'1) which extends longitudinally from the transversal edge (30) of said mini-card (MC) adjacent to said front transversal edge (22) of said support (10) up to said front transversal edge (22) of said support (10).

2. A card according to claim 1, **characterized in that** said upper groove (52') of said upper connecting link (B'2) has a section in a plane perpendicular to that of said support (10) and parallel to the transversal sides (22, 24) of said substantially V-shaped support (10).

3. A card according to claim 2, **characterized in that** said upper groove (52') of the upper connecting link (B'2) is substantially parallel to the longitudinal edges (26, 28) of said mini-card (MC) and **in that** the branch (521') of said V which is the closest to said mini-card (MC) makes an acute angle (ai) with the face (12) of said support (10) which is greater that the acute angle (02) made by the branch (522') of said V which is the farthest from said mini-card (MC) with the face (12).

4. A card according to claim 3, **characterized in that** the acute angle between the branch (521') of said V which is the closest to said mini-card (MC) and said face (12) is between 45° and 90°.

5. A card according to one of claims 3 or 4, **characterized in that** the acute angle (OC2) between the branch (522') of said V which is the farthest from said mini-card (MC) and said face (12) is between 15° and 45°.

6. A card according to one of claims 3 to 5, **characterized in that** the depth (D) of said upper groove (52') of said upper connecting link (B'2) is between 0.1 and 0.3mm.

7. A card according to one of claims 1 to 6, **characterized in that** said upper groove (53') of said lower connecting link (B'3) has a section in a plane perpendicular to that of said support (10) and parallel to the transversal sides (22, 24) of said support having substantially the shape of a trapeze, the bases of which are substantially parallel to the plane of said support (10).

8. A card according to claim 7, **characterized in that** said upper groove (53') of said lower connecting link (B'3) is substantially parallel to the longitudinal edges (26, 28) of said mini-card (MC) and **in that** the side (532') of said trapeze which is the closest to said mini-card (MC) makes an acute angle (pi) with the face (12) of said support (10) greater than the acute angle (β2) made by the side (533') of said trapeze which is the farthest from said mini-card (MC) with the face (12).

9. A card according to one of claims 7 or 8, **characterized in that** the acute angle (pi) between the side (532') of said trapeze which is the closest to said mini-card (MC) and said face (12) is between 60° and 90°.

10. A card according to one of claims 7 to 9, **characterized in that** the acute angle (2) between the side (533') of said trapeze which is the farthest from said mini-card (MC) and said face (12) is between 30° and 75°.

11. A card according to one of claims 7 to 10, **characterized in that** the length (L) of the smaller base (531') of said trapeze is from 0.1 to 0.5mm.

12. A card according to claim 1, **characterized in that** said third connecting link (B'1) has a section in a plane perpendicular to that of said support (10) and parallel to the longitudinal sides (18, 20) of said substantially V-shaped support (10).

13. A card according to one of claims 1 to 12, **characterized in that** said support (10) is obtained by moulding.

**Patentansprüche**

1. Karte (C') von der Art einer Chipkarte, die einen ebenen, deutlich rechteckigen Trager (10) umfaßt, der zwei deutlich parallel zueinander verlaufende Langskanten (18, 20) aufweist und zwei Querkanten (22, 24), die Vorderkante und Ruckkante genannt werden und deutlich parallel zueinander und senkrecht zu den besagten Langskanten (18, 20) verlaufen, wobei der besagte Trager (10) dazu bestimmt ist, auf einem sogenannten funktionalen Abschnitt (14) des besagten Tragers (10), der sich auf der Vorderseite (12) des letzteren und in der Nachbarschaft der besagten vorderen Querkante (22) befindet, zumindest einen elektrischen Kontaktbereich (16) aufzunehmen, wobei der besagte Trager (10) ferner einen deutlich rechteckigen Schlitz (F) aufweist, der den besagten funktionalen Abschnitt (14) umgibt, so daß er eine Minikarte (MC) abgrenzt, die vom besagten Trager (10) ablösbar ist und durch zumindest zwei Verbindungsubergange (B'2, B'3) mit dem besagten Trager (10) verbunden ist, wobei die besagte Minikarte (MC) eine Kontur hat, die deutlich parallel zu derjenigen des besagten Tragers (10) der besagten Karte (C') verlauft, wobei sich jeder der besagten Verbindungsubergange (B'2, B'3) ab einer beziehungsweise der anderen Langskante (26, 28) der besagten Minikarte (MC) in Richtung der direkt anschließenden Langskante (18, 20) der besagten Karte (C') erstreckt, wobei jeder der besagten Verbindungsubergange (B'2, B'3) zwei sich gegenuberliegende Rillen auf jeder der Seiten des besagten Verbindungsubergangs (B'2, B'3) umfaßt, wobei die besagten Rillen geeignet sind, Biegekraften zu widerstehen, und die sogenannten oberen Rillen jedes der besagten Verbindungsubergange (B'2, B'3), die von der Vorderseite (12) des besagten Tragers getragen werden und voneinander getrennt sind, so daß der Verbindungsubergang (B'2), der einer der besagten Langskanten des besagten Tragers am nachsten ist, der sogenannte obere Verbindungsubergang, den Biegekraften weniger widersteht, als der andere Verbindungsubergang (B'3), der sogenannte untere Verbindungsubergang, **dadurch gekennzeichnet, daß** die besagte Karte (C') ferner einen dritten Ubergang (B'1) umfaßt, der sich längs ab der Querkante (30) der besagten an die besagte vordere Querkante (22) des besagten Tragers (10) anschließenden Minikarte (MC) bis zur besagten vorderen Querkante (22) des besagten Tragers (10) erstreckt.

2. Karte nach Anspruch 1, **dadurch gekennzeichnet, daß** die besagte obere Rille (52') des besagten oberen Verbindungsubergangs (B'2) einen Abschnitt in einer Ebene aufweist, die senkrecht zu derjenigen des besagten Tragers (10) und parallel zu den Querkanten (22, 24) des besagten Tragers (10) deutlich in V-Form steht.

3. Karte nach Anspruch 2, **dadurch gekennzeichnet, daß** die besagte obere Rille (52') des oberen Verbindungsubergangs (B'2) deutlich parallel zu den Langskanten (26, 28) der besagten Minikarte (MC) verlauft, und dadurch, daß der Schenkel (521') des besagten V, der der besagten Minikarte (MC) am nachsten ist, einen spitzen Winkel (ai) mit der Vorderseite (12) des besagten Tragers (10) über dem spitzen Winkel (02) bildet, den der Schenkel (522') des besagten V, der am weitesten von der besagten Minikarte (MC) entfernt ist, mit der Vorderseite (12) bildet.

4. Karte nach Anspruch 3, **dadurch gekennzeichnet, daß** der spitze Winkel zwischen dem Schenkel (521') des besagten V, der der besagten Minikarte (MC) am nachsten ist, und der besagten Vorderseite (12) zwischen 45 Grad und 90 Grad betragt.

5. Karte nach einem beliebigen der vorstehenden Anspruche 3 oder 4, **dadurch gekennzeichnet, daß** der spitze Winkel (OC2) zwischen dem Schenkel (522') des besagten V, der von der besagten Minikarte (MC) am weitesten entfernt ist, und der besagten Vorderseite (12) zwischen 15 Grad und 45 Grad betragt.

6. Karte nach einem beliebigen der vorstehenden Anspruche 3 bis 5, **dadurch gekennzeichnet, daß** die Tiefe (D) der besagten oberen Rille (52') des besagten oberen Verbindungsubergangs (B'2) zwischen 0,1 Millimeter und 0,3 Millimeter betragt.

7. Karte nach einem beliebigen der vorstehenden Anspruche 1 bis 6, **dadurch gekennzeichnet, daß** die besagte obere Rille (53') des besagten unteren Verbindungsubergangs (B'3) einen Abschnitt in einer Ebene aufweist, die senkrecht zu derjenigen des besagten Tragers (10) und parallel zu den Querkanten (22, 24) des besagten Tragers (10) deutlich in Form eines Trapezes steht, dessen Grundseiten deutlich parallel zur Ebene des besagten Tragers (10) verlaufen.

8. Karte nach Anspruch 7, **dadurch gekennzeichnet, daß** die besagte obere Rille (53') des besagten unteren Verbindungsubergangs (B'3) deutlich parallel zu den Langskanten (26, 28) der besagten Minikarte (MC) verlauft, und dadurch, daß die Seite (532') des besagten Trapezes, die der besagten Minikarte (MC) am nachsten ist, einen spitzen Winkel (pi) mit der Vorderseite (12) des besagten Tragers (10) über dem spitzen Winkel (ß2) bildet, den die Seite (533') des besagten Trapezes, die am weitesten von der besagten Minikarte (MC) entfernt ist, mit der Vorderseite (12) bildet.

9. Karte nach einem beliebigen der vorstehenden Anspruche 7 oder 8, **dadurch gekennzeichnet, daß** der spitze Winkel (pi) zwischen der Seite (532') des besagten Trapezes, die der besagten Minikarte (MC) am nachsten ist, und der besagten Vorderseite (12) zwischen 60 Grad und 90 Grad betragt.

10. Karte nach einem beliebigen der vorstehenden Anspruche 7 bis 9, **dadurch gekennzeichnet, daß** der spitze Winkel (2) zwischen der Seite (533') des besagten Trapezes, die von der besagten Minikarte (MC) am weitesten entfernt ist, und der besagten Vorderseite (12) zwischen 30 Grad und 75 Grad betragt.

11. Karte nach einem beliebigen der vorstehenden Anspruche 7 bis 10, **dadurch gekennzeichnet, daß** die Lange (L) der kleinen Grundseite (531') des besagten Trapezes zwischen 0,1 Millimeter und 0,5 Millimeter betragt.

12. Karte nach Anspruch 1, **dadurch gekennzeichnet, daß** der besagte dritte Ubergang (B'1) einen Abschnitt in einer Ebene aufweist, die senkrecht zu derjenigen des besagten Tragers (10) und parallel zu den Langskanten (18, 20) des besagten Tragers (10) deutlich in V-Form steht.

13. Karte nach einem beliebigen der vorstehenden Anspruche 1 bis 12, **dadurch gekennzeichnet, daß** der besagte Trager (10) durch Formarbeit erzielt wird.

# FIG_1

EP 1 433 127 B1

## FIG_2

## FIG_3

## FIG_4

**EP 1 433 127 B1**

**RÉFÉRENCES CITÉES DANS LA DESCRIPTION**

**Documents brevets cités dans la description**

- WO 9938118 A
- FR 2783948
- US 5936227 A